# FASCICULE DE BREVET EUROPEEN

(11) **EP 2 957 464 B1**
(45) Date de publication et mention de la délivrance du brevet: **30.09.2020**
(21) Numéro de dépôt: 15171645.3
(22) Date de dépôt: 11.06.2015
(51) Int. Cl.: F21S 41/663, B60Q 1/14

(54) **MODULE D ÉCLAIRAGE ET/OU DE SIGNALISATION ROTATIF**
DREHBARES BELEUCHTUNGS- UND/ODER SIGNALISIERUNGSMODUL
ROTARY LIGHTING AND/OR SIGNALLING MODULE

(30) Priorité: 16.06.2014 FR 1455504
(43) Date de publication de la demande: 23.12.2015
(73) Titulaire: VALEO VISION, 93012 Bobigny Cedex (FR)
(72) Inventeur: DE LAMBERTERIE, Antoine, 75019 PARIS (FR); DUBOSC, Christophe, 93250 VILLEMOMBLE (FR); REISS, Benoit, 95580 MAGENCY (FR); ELHACHIR, Brahim, 75019 PARIS (FR); SOMMERSCHUH, Stephan, 75013 PARIS (FR); THABET, Ziyed, PARIS 75015 (FR)

(56) Documents cités:
- EP-A1- 1 980 447
- EP-A1- 2 060 441
- EP-A1- 2 196 727
- EP-A1- 2 366 587
- EP-A2- 2 395 280
- EP-A2- 2 415 636
- EP-A2- 2 484 557
- WO-A1-2009/112125
- DE-A1-102009 054 249
- DE-A1-102010 048 100
- FR-B1- 2 797 677
- US-A1- 2008 298 077
- US-A1- 2013 204 498
- US-B2- 7 427 151
- US-B2- 9 458 976

## Description

L'invention a trait au domaine de l'éclairage et/ou de la signalisation, notamment pour véhicules automobiles. Plus particulièrement, l'invention a trait à un module d'éclairage et/ou de signalisation pour véhicule automobile, ainsi qu'à un projecteur comprenant un tel module.

Le document FR 2 817 212 décrit un projecteur de véhicule automobile avec une fonction d'éclairage directionnel plus connu sous l'acronyme DBL (Dynamic Bending Light). Le projecteur comprend un système optique dont la direction d'éclairage est modifiée par rotation, un arbre de sortie couplé au système optique afin que celui-ci soit entraîné, un moteur, et un mécanisme de transmission de rotation couplé au moteur afin qu'il transmette la rotation du moteur à l'arbre de sortie, dans lequel le moteur, l'arbre de sortie et le mécanisme de transmission de rotation sont placés dans un corps de boîtier, et un arbre rotatif du moteur est supporté par le corps de boîtier. Un arbre de support d'un pignon intermédiaire placé entre le moteur et l'arbre de sortie est directement supporté par le corps de boîtier.

Le document EP 1 2858 12 décrit un projecteur comportant un ensemble mobile muni d'un réflecteur et d'une source de lumière, et un ensemble fixe bordant au moins partiellement l'ensemble mobile qui peut tourner, relativement à l'ensemble fixe, autour d'un premier axe vertical pour un réglage en azimut, et autour d'un axe transversal horizontal pour un réglage en site. Une telle disposition a pour but de garder les jeux de fonctionnement constants entre les pièces fixes et les pièces mobiles.

Le document EP 2 423 047 décrit un projecteur d'un véhicule automobile conçu pour réunir la fonction d'éclairage de nuit avec la fonction de signalisation de jour connue sous l'acronyme anglais DRL (Daytime Running Light). L'éclairage de nuit est obtenu par un module d'éclairage fixe, tandis que l'éclairage de type DRL est réalisé au moyen d'un réseau de diodes électroluminescentes pouvant être escamoté dans une position interne au projecteur. Le document US7427151 décrit un projecteur de véhicule automobile comprenant plusieurs modules mobiles en rotation pour former un faisceau de type spot déplaçable latéralement.

L'invention a pour objectif de proposer un module et un projecteur d'éclairage et/ou de signalisation apte à assurer au moins deux fonctions d'éclairage et/ou de signalisation et de construction simple et compacte.

Dans ce but, l'invention a pour objet un projecteur d'éclairage et/ou de signalisation notamment pour véhicule automobile selon la revendication 1.

En outre l'invention possède les caractéristiques suivantes, considérées isolément ou en combinaison :
- le dispositif de commande est apte à élaborer en outre des instructions de commande d'allumage de la source de lumière associée audit module ;
- les commandes d'allumage de la source de lumière consistent en une commande du degré d'intensité lumineuse de l'émission de la source de lumière ;
- la source de lumière consiste en deux sources à semi-conducteurs activables sélectivement pour produire distinctement un faisceau lumineux primaire de type feux de route et un faisceau lumineux primaire de type feux de croisement, les sources à semi-conducteurs pouvant être notamment des diodes électroluminescentes.

La source de lumière est avantageusement fixe par rapport à l'actionneur.

Le système optique pourrait consister en une ou plusieurs lentilles et/ou un ou plusieurs miroirs.

Il peut également consister en un réflecteur monté mobile en rotation, formé par une première face réfléchissante d'un support monté en bout de l'axe mis en rotation sous l'effet de l'actionneur. Dans ce cas, on peut prévoir un châssis comportant au moins un écran apte à être placé en regard de la première face réfléchissante, ledit écran étant majoritairement neutre, pour être traversé sans perturbation par les rayons lumineux réfléchis par la première face réfléchissante, et portant à sa périphérie des moyens optiques de découplage de rayons lumineux émis par une deuxième source de lumière. Le découplage des rayons pourra se faire soit par diffusion, soit par réflexion totale et/ou réfraction. Et le châssis peut être solidaire en rotation du support.

On pourra prévoir que le projecteur comporte en outre un dispositif pour la projection d'un faisceau global principal, lesdits modules d'éclairage et/ou de signalisation générant ensemble un faisceau global complémentaire du faisceau global principal.

L'invention concerne également un procédé de commande d'un ensemble d'au moins deux modules d'éclairage et/ou de signalisation conforme à ce qui vient d'être présenté, dans lequel on commande en rotation un ou plusieurs modules et le faisceau lumineux primaire que ces modules sont aptes respectivement à produire, de manière à réaliser une fonction d'accompagnement d'éclairage, par un faisceau lumineux global formé par lesdits faisceaux lumineux primaire, ladite fonction d'accompagnement d'éclairage étant adaptée à une situation de conduite déterminée en fonction de l'analyse d'informations d'état de la scène de route et/ou du véhicule.

Selon une caractéristique de l'invention, on détermine quel type d'éclairage est réalisé par un dispositif principal d'émission d'un faisceau lumineux, et la fonction d'accompagnement est déterminée en fonction du type d'éclairage déterminé.

Dans le procédé de commande selon l'invention, on peut réaliser la mise en rotation combinée de chacun des modules, ou bien réaliser des mises en rotation différentes des modules d'un même ensemble.

Par ailleurs, on peut réaliser la fonction d'accompagnement d'éclairage, outre par la mise en rotation des modules, par la diminution, l'augmentation ou l'extinction de l'intensité d'éclairage des sources de lumière associées auxdits modules.

Une pluralité de fonctions d'accompagnement d'éclairage est possible parmi lesquelles :
- une fonction d'accompagnement d'éclairage adaptée à une situation de virage, dans laquelle on commande en rotation chacun des modules pour augmenter la largeur du faisceau global complémentaire d'un côté ou de l'autre en fonction de l'angle volant dans le virage ;
- une fonction d'accompagnement d'éclairage adaptée à une situation de conduite à grande vitesse, dans laquelle on réalise un centrage de tous les modules dans l'axe du véhicule ;
- une fonction d'accompagnement d'éclairage adaptée à des conditions de mauvaise visibilité, dans laquelle on fait pivoter les modules pour écarter les faisceaux lumineux primaires qu'ils produisent ;
- une fonction d'accompagnement d'éclairage de type route non éblouissant, dans lequel on fait pivoter deux modules voisins pour créer une zone d'éclairage sombre dans laquelle est détecté un véhicule suivi ou croisant.

D'autres caractéristiques et avantages de la présente invention apparaitront plus clairement à l'aide de la description et des dessins parmi lesquels :

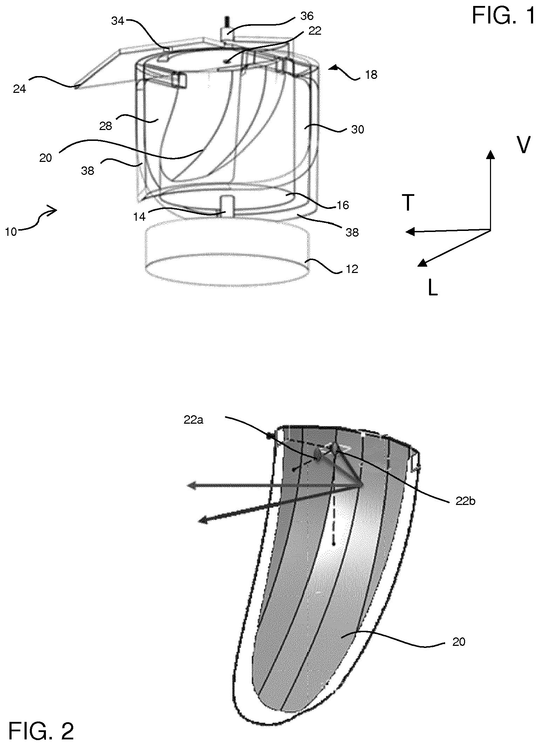

- la figure 1 est une vue en perspective de trois quart avant d'un module d'éclairage et/ou de signalisation selon un premier mode de réalisation de l'invention, représenté ici dans une première position avec une face d'un support formant réflecteur qui est tournée vers l'avant et avec un premier écran d'un châssis qui est en regard de ce réflecteur ;
- la figure 2 est une vue en perspective, de trois quart avant, du réflecteur d'un module d'éclairage selon un mode de réalisation particulier en ce que la source de lumière apte à éclairer le réflecteur consiste en deux diodes électroluminescentes ;

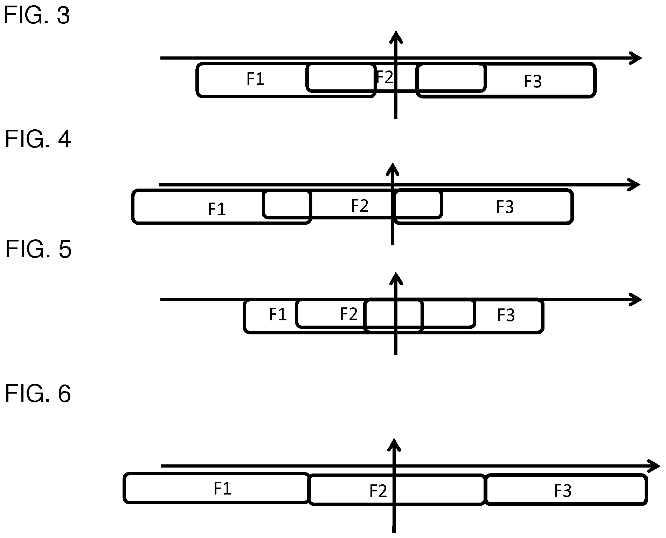

- les figures 3 à 6 sont des représentations schématiques de la projection de trois faisceaux issus de trois modules d'un ensemble selon l'invention, dans différentes fonctions d'accompagnement d'éclairage parmi lesquelles un fonctionnement standard (fig.3), un fonctionnement en virage (fig.4), un fonctionnement à grande vitesse (fig.5) et un fonctionnement en mauvaises conditions de visibilité (fig.6) ; et

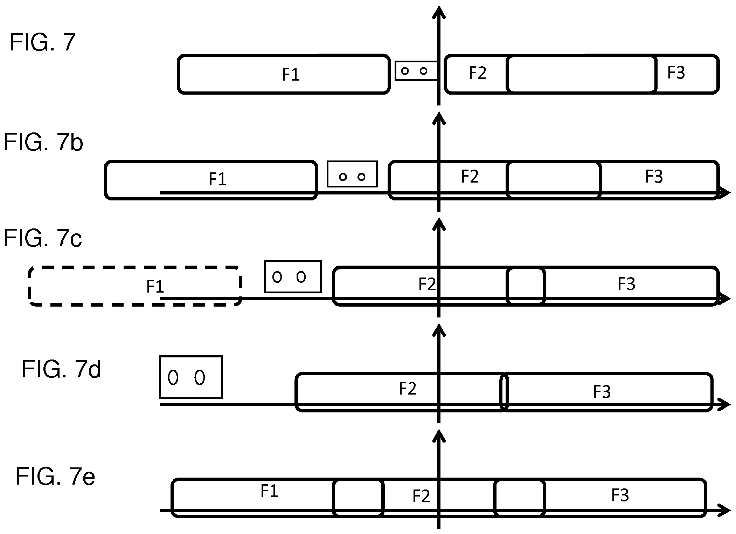

- les figures 7 à 7e sont des représentations schématiques semblables à celles des figures 3 à 6, illustrant une fonction d'accompagnement spécifique de type faisceau route non éblouissant.

Dans la description qui va suivre, on adoptera à titre non limitatif une orientation longitudinale, verticale et transversale selon l'orientation traditionnellement utilisée dans l'automobile et indiquée par le trièdre L, V, T reporté sur la figure 1.

Un ensemble d'au moins deux modules équipant un projecteur de véhicule automobile permettant la mise en œuvre du procédé de commande d'éclairage et/ ou de signalisation selon l'invention comporte des modules rotatifs que l'on va décrire dans un premier temps, en s'appuyant notamment sur le mode de réalisation illustré sur la figure 1. Le projecteur comporte avantageusement un ensemble de trois modules et c'est cet agencement qui sera choisi dans la présente description.

Chaque module est fixé dans un boitier (non représenté) du projecteur, et il comporte un premier actionneur 12 solidaire du boitier, un premier axe 14 entrainé en rotation par le premier actionneur 12, et un support 16 solidaire en rotation du premier axe.

Le premier actionneur 12 comprend un moteur électrique, piloté par des moyens de commande ici non représentés et aptes à transmettre une instruction de commande audit moteur, et des moyens de transmission en rotation entre le moteur et le premier axe. Dans les modes de réalisation représentés, le premier axe 14 soutient le support 16 en sa partie inférieure, et le premier axe 14 est sensiblement vertical, mais il pourrait avoir une autre orientation.

Le support 16 du module 10 comprend une première face réfléchissante 20 jouant le rôle d'un réflecteur apte à assurer une fonction d'éclairage et/ou de signalisation réglementaire. Cette fonction est remplie par la coopération du réflecteur 20 avec une première source de lumière 22. La première source de lumière 22 est fixe par rapport à l'actionneur.

On entend par " réglementaire " le fait qu'une fonction d'éclairage et/ou de signalisation est conforme à la réglementation en vigueur. Cette fonction d'éclairage et/ou de signalisation réglementaire peut être une fonction de signalisation de jour, communément désigné par l'appellation DRL (de l'acronyme anglo-saxon " Daytime Running Light "), ou bien une fonction d'éclairage de croisement, communément désignée " code ", ou encore une fonction d'éclairage communément désignée " route ", ou encore une fonction d'éclairage communément désignée " antibrouillard ". La première face réfléchissante 20 assure ainsi la formation d'un faisceau d'éclairage et/ou de signalisation réglementaire dirigé vers l'avant du véhicule.

La première source de lumière 22 est une source à semi-conducteur, et de préférence du type diode à électroluminescence, et elle est sensiblement alignée sur le premier axe 14. On entend par l'expression " sensiblement alignée " que la distance entre le centre géométrique de la diode électroluminescente 22 et l'axe de rotation du support 16 n'est pas supérieure aux dimensions de la diode électroluminescente 22. Cette dernière peut être fixée et positionnée sur une carte de circuits imprimés 24, elle-même fixée dans le boitier (non représenté) du projecteur.

Le support 16 du module 10 comporte également une deuxième face 26 opposée à la première face formant le réflecteur 20 et assurant une deuxième fonction. Cette deuxième fonction peut être soit une fonction de signalisation de jour réglementaire, soit une fonction d'éclairage de croisement et/ou de route réglementaire, soit une fonction d'aspect.

Le support est monté mobile en rotation de sorte que l'on peut disposer soit la face réfléchissante, soit la face d'aspect tournée vers l'avant du véhicule, pour réaliser soit la première fonction d'éclairage, soit la deuxième fonction de signalisation. Sur la figure 1, le module 10 est orienté de manière à ce que le réflecteur 20 soit visible et orienté vers l'avant du véhicule. Le module 10 assure en conséquence dans cette configuration la fonction d'éclairage et/ou de signalisation réglementaire décrite ci-avant. Lorsque la première source de lumière 22 est allumée, elle émet des rayons lumineux en direction du réflecteur, qui renvoie les rayons lumineux vers l'avant du véhicule pour remplir la fonction d'éclairage et/ou de signalisation réglementaire.

Le module comporte en outre un dispositif de commande, apte à formuler, sur la base d'informations reçues en provenance de capteurs d'état du véhicule, des instructions de commande à envoyer à l'actionneur, pour piloter la rotation du support. On peut prévoir une rotation complète ou une rotation partielle.

La rotation complète consiste en une rotation du support entre une première position où la face réfléchissante est en position active, c'est-à-dire tournée vers l'avant du véhicule, et une deuxième position où c'est la face d'aspect qui est en position active. Elle est notamment utilisée au démarrage du véhicule.

La rotation partielle consiste en une rotation de quelques degrés du support, et elle est notamment utilisée lorsque la face réfléchissante est en position active et que la source de lumière émet des rayons en direction de cette face réfléchissante, pour décaler de quelques degrés le faisceau formé en sortie du module. La fonction d'éclairage peut alors être directionnelle, du type DBL (Dynamic Bending Light), grâce à l'actionneur 12 du module 10, qui peut commander une rotation du support de quelques degrés autour du premier axe.

Tel qu'illustré, le module 10 peut comporter un pivot supérieur 36 colinéaire avec le premier axe 14 par l'intermédiaire du support 16 pour accroître la précision du positionnement relatif de la première source de lumière 22 par rapport au réflecteur 20.

On comprend à la lecture de ce qui précède qu'il importe qu'un système optique soit mobile en rotation de sorte que le faisceau qu'il génère puisse être orienté.

Le système optique est ici formé, tel que cela est visible sur la figure 1, par la face réfléchissante du support, apte à dévier les rayons lumineux émis par la première source de lumière, et par un écran transparent, apte à se laisser traverser par les rayons pour permettre la formation d'un faisceau en sortie du module. On comprendra que la conception du système optique pourrait être autre et notamment ne pas prévoir d'écran en regard du réflecteur.

Ici l'écran est porté par un châssis 18 qui comporte deux écrans 28 et 30 qui s'étendent chacun sensiblement verticalement dans le module et qui sont reliés à leur extrémité supérieure par des parois de liaison transversales 32. Le châssis est agencé dans le module de sorte que le premier écran 28 ou le deuxième écran 30 soit apte à prendre une position active sur le trajet des rayons lumineux lorsque les moyens de déviation optique réfléchissent des rayons lumineux émis par la première source de lumière vers la sortie du module, de sorte que les rayons lumineux traversent la face transparente de l'écran en position active.

Par ailleurs, le premier écran ou le deuxième écran du châssis 18 se retrouvant dans cette position active est disposé au droit d'au moins une deuxième source de lumière 34, avantageusement fixée et positionnée sur la carte de circuits imprimés 24, porteuse par ailleurs de la première source de lumière 22. La deuxième source de lumière 34 est fixe par rapport à la première source de lumière 22 et elle peut être constituée d'une ou plusieurs sources à semi-conducteurs, notamment des diodes électroluminescentes. L'allumage de cette deuxième source de lumière 34 permet d'illuminer l'écran disposé dessous, pour que la partie périphérique 38 de cet écran émette de la lumière. On peut ainsi assurer une fonction de signalisation réglementaire. Il convient de noter que la deuxième source de lumière peut être allumée seule ou simultanément avec la première source de lumière 22. Cela permet d'utiliser un premier écran du châssis 18 en complément du réflecteur 20.

Il convient de noter que l'addition des faisceaux lumineux primaires, générés par les modules qui ont été décrits plus haut, constitue un faisceau lumineux global complémentaire à un faisceau principal réglementaire généré par un dispositif conventionnel, et que ce faisceau complémentaire peut être associé à un faisceau principal correspondant à des feux de route ou bien à des feux de croisement. Le véhicule peut être équipé d'un ensemble de modules pouvant apporter complément aux feux de route, ainsi que d'un ensemble de modules pouvant apporter complément aux feux de croisement. Mais il est intéressant que chaque module de l'ensemble selon l'invention comporte des moyens pour proposer un faisceau lumineux primaire type code (feux de croisement) et un faisceau lumineux primaire type route qui soient activables sélectivement. Ici, ces moyens consistent en la réalisation de la première source de lumière 22 avec deux diodes électroluminescentes 22a et 22b disposées en regard de la face réfléchissante, chaque diode pouvant être allumée sélectivement pour illuminer la face réfléchissante sous un angle différent qui impacte l'angle des rayons en sortie du module. Le dispositif de commande reçoit une information sur le type de faisceau principal utilisé à l'instant donné et il envoie une instruction de commande vers les composants de la carte de circuits imprimés associée aux diodes pour l'allumage d'une diode et l'extinction de l'autre en fonction de cette information.

Dans le projecteur selon l'invention, la rotation possible du dispositif optique porté par chaque module permet la rotation des faisceaux lumineux primaires, et la création par addition d'un faisceau lumineux global rendu différent à chaque rotation d'un des modules. On comprend dès lors que différentes fonctions d'accompagnement d'éclairage et/ou de signalisation peuvent être mises en œuvre.

On va décrire dans un premier temps, en s'appuyant sur les figures 3 à 6, une pluralité, non forcément exhaustive, de fonctions d'accompagnement d'éclairage possibles lorsque le faisceau principal est un feu de croisement. La description va porter sur un projecteur gauche de véhicule comportant un ensemble de trois modules en série aptes à émettre chacun un faisceau complémentaire d'une fonction d'éclairage et/ou de signalisation principale réalisée par d'autres modules, et elle va porter sur les trois faisceaux de lumière complémentaires émis, référencés F1, F2 et F3 sur les figures. Le module gauche du projecteur gauche émet le premier faisceau F1, le module central émet le deuxième faisceau F2 et le module droit du projecteur gauche émet le troisième faisceau F3. On pourra évidemment calquer sur le projecteur droit les fonctions d'accompagnement décrites pour le projecteur gauche.

Une première fonction d'accompagnement est un accompagnement standard, illustré sur la figure 3. Une deuxième et une troisième fonction d'accompagnement sont déclenchées en fonction de conditions de conduite, tandis qu'une quatrième fonction d'accompagnement est déclenchée en fonction de conditions de visibilité.

Dans la première fonction d'accompagnement standard, les modules émettent à une intensité lumineuse équivalente, dans l'axe de circulation du véhicule. Un chevauchement partiel des faisceaux voisins est réalisé, de manière à éviter que des trous dans l'éclairage additionnel ne se forment. Les modules latéraux sont à cet effet légèrement pivotés vers le module central, de manière à réaliser le chevauchement des faisceaux F1 et F2 d'une part, et F2 et F3 d'autre part.

Une deuxième fonction d'accompagnement, illustré sur la figure 4, peut se dérouler lorsqu'une situation de virage est détectée. Dans une fonction de type DBL, tous les modules sont mis en rotation par l'intermédiaire du dispositif de commande et des actionneurs associés respectivement aux modules. L'instruction de commande en rotation donnée aux modules est la même pour chacun des modules, avec un même angle de rotation, de quelques degrés. On comprend que la valeur et le signe de l'angle de rotation voulu dépend de l'orientation et de la fermeture du virage détecté.

Une troisième fonction d'accompagnement, illustré sur la figure 5, est utile sur les voies de circulation rapide, du type autoroute. On recherche dans ces cas de conduite à avoir une portée d'éclairage la plus lointaine possible et pour ce faire, à avoir un faisceau complémentaire global qui soit le plus condensé possible. Les modules latéraux sont pivotés vers l'intérieur, de sorte que les faisceaux correspondant F1 et F3 se superposent au faisceau F2 du module central. Cela pourra éventuellement être accompagné d'une correction d'assiette pour redresser verticalement le faisceau global. Cette troisième fonction d'accompagnement pourra notamment être déclenchée lorsqu'une information de vitesse dépassant un seuil de grande vitesse est reçue par le dispositif de commande.

Une quatrième fonction d'accompagnement est déclenchée lorsque des conditions de visibilité sont moins bonnes, et par exemple lorsqu'il y a du brouillard. On cherche alors à étaler le faisceau, en le projetant relativement bas dans le faisceau code assuré par ailleurs par le dispositif conventionnel, pour augmenter la lumière proche du véhicule. Dans ce contexte, les modules latéraux sont pivotés vers l'extérieur, de sorte que les faisceaux correspondant F1 et F3 viennent en juxtaposition de part et d'autre du faisceau F2 du module central. Et l'on procède à une correction verticale par des moyens connus par ailleurs et non décrits ici.

On va décrire maintenant une pluralité, non forcément exhaustive, de fonctions d'accompagnement d'éclairage possibles lorsque le faisceau principal est un feu de route. Chacune des fonctions d'accompagnement décrite ci-dessus lorsque le faisceau principal est un feu de croisement peut être mise en œuvre lorsque le faisceau principal est un feu de route. Seule la diode en fonctionnement, dans le module selon le mode de réalisation décrit ci-dessus, change.

Une autre fonction d'accompagnement est illustrée sur la figure 7. On réalise une fonction de type faisceau route non éblouissant dans laquelle les faisceaux primaires sont juxtaposés, le faisceau global étant ainsi décomposé en des bandes longitudinales sur lesquelles on peut agir distinctement. Le dispositif de commande utilise une information de détection d'un véhicule, par exemple amené à croiser le véhicule selon l'invention, pour créer un masque dans le faisceau au niveau de la zone de présence de ce véhicule et éviter que le véhicule croisant ne soit ébloui tout en conservant de chaque côté de ce véhicule un faisceau fortement éclairant. Dans l'application à l'invention, ce masque est créé par des lois d'allumage et d'extinction en plus des mouvements mécaniques de rotation indépendantes.

Au moment de la détection, le véhicule au loin est sensiblement sur l'axe optique, ici légèrement à gauche. On réalise une première étape de gestion de l'agencement des modules dans laquelle le module gauche et le module central sont rendus mobile en rotation dans un sens tel que les faisceaux F1 et F2 s'écartent l'un de l'autre et laissent une zone sombre, c'est à dire une zone non impactée par les faisceaux complémentaires. On peut faire pivoter le module droit pour que la zone de recouvrement partiel entre le module central et le module droit reste la même. Dans la réalisation illustrée, le module droit reste fixe et le faisceau F3 correspondant ne bouge pas.

Au fur et à mesure du rapprochement du véhicule (figure 7b), le véhicule croisant s'écarte de l'axe optique. Une deuxième étape de gestion de l'agencement des modules a lieu, dans laquelle la rotation du module gauche dans le sens de l'éloignement vers la gauche de l'axe optique est prolongée, et le module central est désormais rendu mobile en rotation également dans le sens de l'éloignement vers la gauche de l'axe optique, de sorte que les faisceaux F1 et F2 se déplacent vers la gauche en conservant entre eux une zone sombre. On comprend que la vitesse de rotation du module gauche est légèrement plus rapide que la vitesse de rotation du module central pour que la zone sombre s'agrandisse régulièrement, au rythme de l'avancement du véhicule croisant. Le module droit reste fixe et le faisceau F3 correspondant ne bouge pas, de sorte que le recouvrement des faisceaux F2 et F3 diminue.

Cette deuxième étape peut s'accompagner d'une gestion de l'intensité d'allumage de la source de lumière du module gauche. Le dispositif de commande génère une instruction de diminution de l'intensité pour éviter d'illuminer trop fortement le côté de la route, ce qui est représenté par le faisceau F1 en pointillés sur la figure 7c.

Cette diminution d'intensité se poursuit jusqu'à l'extinction de la source de lumière (figure 7d). Dans une variante non représentée, lorsque la source de lumière du module gauche est éteinte, il peut être prévu une étape de replacement du faisceau F1. On pourra prévoir, le temps que le véhicule croisant passe, que le faisceau F1 vienne en superposition des faisceaux F2 et F3, ou bien qu'il vienne se replacer sur la droite du faisceau F3 si celui-ci s'est décalé vers la gauche pour accompagner le déplacement du faisceau F2.

Lorsque le véhicule est passé, les modules reprennent leur position initiale (figure 7e) alignés sur l'axe optique, et ils réalisent une fonction d'accompagnement classique, en attendant que des informations en provenance de capteurs déclenchent la création par le dispositif de commande d'instructions relatives à telle ou telle fonction d'accompagnement spécifique.

La description qui précède explique clairement comment l'invention permet d'atteindre les objectifs qu'elle s'est fixés et notamment de proposer un ensemble d'au moins deux modules d'éclairage et/ou de signalisation mobiles en rotation qui permette, selon des instructions de commande d'éclairage de la source de lumière et des instructions de commande en rotation du module, la réalisation de différentes combinaisons de fonctions. Si de tels modules peuvent initialement être implantés pour des intentions de style et la réalisation d'une fonction d'éclairage de bienvenue au démarrage du véhicule, il est particulièrement intéressant de pouvoir utiliser ces modules dans un contexte utile et réglementaire d'apport à la photométrie d'ensemble. Il a été précisé que les faisceaux générés par les modules constituaient des faisceaux complémentaires à des faisceaux réglementaires générés par des dispositifs conventionnels. Toutefois, on pourra comprendre que, sous réserve d'apporter les précautions nécessaires pour le respect des conditions réglementaires, ces faisceaux pourraient constituer ensemble directement des faisceaux réglementaires d'éclairage et/ou de signalisation.

L'ensemble de modules selon l'invention est implémenté dans au moins un projecteur d'un véhicule automobile. Et il est avantageux que les deux projecteurs, gauche et droit, comporte un ensemble équivalent. Dans chaque fonction d'accompagnement d'éclairage, on pourra alors prévoir de donner à l'ensemble de modules de chaque projecteur des instructions de commande équivalentes, notamment pour la réalisation de fonction d'accompagnement classique, ou pour la réalisation des fonctions d'accompagnement d'éclairage en virage, en cas de brouillard, sur voie rapide, et on pourra également donner des instructions de commande différentes à chaque ensemble de module, d'un projecteur à l'autre, pour que l'un des ensembles réalise une fonction d'accompagnement d'éclairage standard pendant que l'autre ensemble, depuis l'autre projecteur, réalise une fonction d'accompagnement du type faisceau route non éblouissant par exemple.

## Revendications

1. Projecteur d'éclairage et/ou de signalisation pour véhicule automobile, comprenant un boîtier et un ensemble d'au moins deux modules d'éclairage et/ou de signalisation, dans lequel chaque module (10) comporte un système optique comportant des moyens de déviation (20) de rayons lumineux émis par une première source de lumière (22) de manière à former un faisceau lumineux primaire vers l'avant du véhicule, l'addition des faisceaux lumineux primaires formant en sortie un faisceau lumineux global dudit ensemble,
au moins une partie de chaque module étant montée mobile en rotation autour d'un axe (14) sous l'effet d'un premier actionneur (12) pour déplacer latéralement le faisceau lumineux primaire correspondant en sortie du module,
le projecteur comportant en outre un dispositif de commande apte à élaborer, distinctement pour chaque module, des instructions de commande en rotation du système optique dudit module,
la première source de lumière (22) restant fixe par rapport audit premier actionneur (12), **caractérisé en ce que** chaque module est fixé dans ledit boitier du projecteur, et **en ce que** dans chaque module, ledit premier actionneur (12) est solidaire du boitier.

2. Projecteur selon la revendication 1, **caractérisé en ce que** le dispositif de commande est apte à élaborer en outre des instructions de commande d'allumage de la source de lumière (22) associée audit module (10).

3. Projecteur selon la revendication 2, **caractérisé en ce que** lesdites commande d'allumage de la source de lumière (22) consistent en une commande du degré d'intensité lumineuse de l'émission de la source de lumière.

4. Projecteur selon l'une des revendications précédentes, **caractérisé en ce que** la source de lumière (22) consiste en deux sources à semi-conducteurs (22a, 22b) activables sélectivement pour produire distinctement un faisceau lumineux primaire de type feux de route et un faisceau lumineux primaire de type feux de croisement.

5. Projecteur selon l'une des revendications précédentes, **caractérisé en ce que** le système optique consiste en une ou plusieurs lentilles et/ou un ou plusieurs miroirs.

6. Projecteur selon l'une des revendications 1 à 5, **caractérisé en ce que** le système optique consiste en un réflecteur monté mobile en rotation, formé par une première face réfléchissante (20) d'un support (16) monté en bout de l'axe (14) mis en rotation sous l'effet du premier actionneur (12).

7. Projecteur selon la revendication 6, **caractérisé en ce qu'**il comporte un châssis (18) comportant au moins un écran (28, 30) apte à être placé en regard de la première face réfléchissante (20), ledit écran étant majoritairement neutre, pour être traversé par les rayons lumineux réfléchis par la première face réfléchissante, et portant à sa périphérie (38) des moyens optiques de découplage de rayons lumineux émis par une deuxième source de lumière (34).

8. Projecteur selon la revendication précédente, **caractérisé en ce que** le châssis (18) est solidaire en rotation du support (16).

9. Projecteur selon l'une des revendications précédentes, **caractérisé en ce qu'**il comporte en outre un dispositif pour la projection d'un faisceau global principal, lesdits modules d'éclairage et/ou de signalisation générant ensemble un faisceau global complémentaire du faisceau global principal.

10. Procédé de commande d'un projecteur comportant un ensemble d'au moins deux modules d'éclairage et/ou de signalisation conforme à l'une des revendications 1 à 9, dans lequel on commande en rotation un ou plusieurs modules (10) et le faisceau lumineux primaire que ces modules sont aptes respectivement à produire, de manière à réaliser une fonction d'accompagnement d'éclairage, par un faisceau lumineux global formé par lesdits faisceaux lumineux primaire, ladite fonction d'accompagnement d'éclairage étant adaptée à une situation de conduite déterminée en fonction de l'analyse d'informations d'état de la scène de route et/ou du véhicule.

11. Procédé de commande selon la revendication 10, **caractérisé en ce que** l'on détermine quel type d'éclairage est réalisé par un dispositif principal d'émission d'un faisceau lumineux, et **en ce que** ladite fonction d'accompagnement est déterminée en fonction du type d'éclairage déterminé.

12. Procédé de commande selon l'une des revendications 10 ou 11, **caractérisé en ce que** l'on réalise la mise en rotation combinée de chacun des modules (10) de l'ensemble.

13. Procédé de commande selon l'une des revendications 10 à 12, **caractérisé en ce que** l'on réalise des mises en rotation différentes des modules (10) d'un même ensemble.

14. Procédé de commande selon l'une des revendications 10 à 13, **caractérisé en ce que** l'on réalise la fonction d'accompagnement d'éclairage, outre par la mise en rotation des modules (10), par la diminution, l'augmentation ou l'extinction de l'intensité d'éclairage des sources de lumière (22) associées auxdits modules.

15. Procédé de commande selon l'une des revendications 10 à 14, **caractérisé en ce que** l'on réalise une fonction d'accompagnement d'éclairage adaptée à une situation de virage, dans laquelle on commande en rotation chacun des modules (10) pour augmenter la largeur du faisceau global complémentaire d'un côté ou de l'autre en fonction de l'angle volant dans le virage.

16. Procédé de commande selon l'une des revendications 10 à 14, **caractérisé en ce que** l'on réalise une fonction d'accompagnement d'éclairage adaptée à une situation de conduite à grande vitesse, dans laquelle on réalise un centrage de tous les modules (10) dans l'axe du véhicule.

17. Procédé de commande selon l'une des revendications 10 à 14, **caractérisé en ce que** l'on réalise une fonction d'accompagnement d'éclairage adaptée à des conditions de mauvaise visibilité, dans laquelle on fait pivoter les modules (10) pour écarter les faisceaux lumineux primaires qu'ils produisent.

18. Procédé de commande selon l'une des revendications 10 à 14, **caractérisé en ce que** l'on réalise une fonction d'accompagnement d'éclairage de type faisceau route non éblouissant, dans lequel on fait pivoter deux modules (10) voisins pour créer une zone d'éclairage sombre dans laquelle est détecté un véhicule suivi ou croisant.

## Patentansprüche

1. Scheinwerfer zur Beleuchtung und/oder Signalisierung für ein Kraftfahrzeug, umfassend ein Gehäuse und eine Anordnung von mindestens zwei Beleuchtungs- und/oder Signalisierungsmodulen, wobei jedes Modul (10) ein optisches System aufweist, das Ablenkmittel (20) zum Ablenken der von einer ersten Lichtquelle (22) abgestrahlten Lichtstrahlen aufweist, so dass ein Primärlichtbündel zur Vorderseite des Fahrzeugs hin gebildet wird, wobei die Addition der Primärlichtbündel im Ausgang ein Gesamtlichtbündel der Anordnung bildet,
wobei mindestens ein Teil jedes Moduls um eine Achse (14) herum unter der Einwirkung eines ersten Aktuators (12) drehbeweglich montiert ist, um das entsprechende Primärlichtbündel im Ausgang des Moduls seitlich zu verlagern,
wobei der Scheinwerfer ferner eine Steuerungsvorrichtung aufweist, die geeignet ist, für jedes Modul getrennt Anweisungen zur Steuerung der Drehung des optischen Systems des Moduls zu verarbeiten, wobei die erste Lichtquelle (22) in Bezug auf den ersten Aktuator (12) feststehend bleibt,
**dadurch gekennzeichnet, dass** jedes Modul in dem Gehäuse des Scheinwerfers fixiert ist, und dadurch, dass in jedem Modul der erste Aktuator (12) mit dem Gehäuse fest verbunden ist.

2. Scheinwerfer nach Anspruch 1, **dadurch gekennzeichnet, dass** die Steuerungsvorrichtung geeignet ist, ferner Anweisungen zur Steuerung des Einschaltens der dem Modul (10) zugeordneten Lichtquelle (22) zu verarbeiten.

3. Scheinwerfer nach Anspruch 2, **dadurch gekennzeichnet, dass** die Steuerungen des Einschaltens der Lichtquelle (22) in einer Steuerung des Helligkeitsgrades des Abstrahlens der Lichtquelle bestehen.

4. Scheinwerfer nach einem der vorhergehenden Ansprüche, **dadurch gekennzeichnet, dass** die Lichtquelle (22) aus zwei Halbleiterquellen (22a, 22b) besteht, die selektiv aktivierbar sind, um getrennt ein Primärlichtbündel vom Typ Fernlicht und ein Primärlichtbündel vom Typ Abblendlicht zu erzeugen.

5. Scheinwerfer nach einem der vorhergehenden Ansprüche, **dadurch gekennzeichnet, dass** das optische System aus einer oder mehreren Linsen und/oder einem oder mehreren Spiegeln besteht.

6. Scheinwerfer nach einem der Ansprüche 1 bis 5, **dadurch gekennzeichnet, dass** das optische System aus einem drehbeweglich montierten Reflektor besteht, der aus einer ersten reflektierenden Seite (20) eines Trägers (16) gebildet wird, der am Ende der Achse (14) angebracht ist, die unter der Einwirkung des ersten Aktuators (12) in Drehung versetzt wird.

7. Scheinwerfer nach Anspruch 6, **dadurch gekennzeichnet, dass** er einen Rahmen (18) aufweist, der mindestens einen Schirm (28, 30) aufweist, der geeignet ist, gegenüber der ersten reflektierenden Seite (20) angeordnet zu werden, wobei der Schirm überwiegend neutral ist, um von den von der ersten reflektierenden Seite reflektierten Lichtstrahlen durchquert zu werden, und an seinem Umfang (38) optische Mittel zur Entkopplung von Lichtstrahlen trägt, die von einer zweiten Lichtquelle (34) abgestrahlt werden.

8. Scheinwerfer nach dem vorhergehenden Anspruch, **dadurch gekennzeichnet, dass** der Rahmen (18) mit dem Träger (16) drehfest verbunden ist.

9. Scheinwerfer nach einem der vorhergehenden Ansprüche, **dadurch gekennzeichnet, dass** er ferner eine Vorrichtung zur Projektion eines Hauptgesamtbündels aufweist, wobei die Beleuchtungs- und/oder Signalisierungsmodule gemeinsam ein ergänzendes Gesamtbündel des Hauptgesamtbündels generieren.

10. Verfahren zur Steuerung eines Scheinwerfers, der eine Anordnung von mindestens zwei Beleuchtungs-und/oder Signalisierungsmodulen nach einem der Ansprüche 1 bis 9 aufweist, wobei man das Drehen eines oder mehrerer Module (10) und des Primärlichtbündels, das zu erzeugen diese Module jeweils geeignet sind, so steuert, dass eine Beleuchtungsbegleitfunktion durch ein Gesamtlichtbündel, das durch die Primärlichtstrahlen gebildet wird, ausgeführt wird, wobei die Beleuchtungsbegleitfunktion in Abhängigkeit von der Analyse von Zustandsinformationen der Straßenszene und/oder des Fahrzeugs an eine bestimmte Fahrsituation angepasst ist.

11. Steuerungsverfahren nach Anspruch 10, **dadurch gekennzeichnet, dass** man bestimmt, welcher Beleuchtungstyp von einer Hauptabstrahlvorrichtung eines Lichtbündels ausgeführt wird, und dadurch, dass die Begleitfunktion in Abhängigkeit von dem bestimmten Beleuchtungstyp bestimmt wird.

12. Steuerungsverfahren nach einem der Ansprüche 10 oder 11, **dadurch gekennzeichnet, dass** man das kombinierte Indrehungversetzen jedes der Module (10) der Anordnung ausführt.

13. Steuerungsverfahren nach einem der Ansprüche 10 bis 12, **dadurch gekennzeichnet, dass** man ein unterschiedliches Indrehungversetzen der Module (10) der Anordnung ausführt.

14. Steuerungsverfahren nach einem der Ansprüche 10 bis 13, **dadurch gekennzeichnet, dass** man die Beleuchtungsbegleitfunktion außer durch das Indrehungversetzen der Module (10) durch die Verringerung, die Erhöhung oder das Ausschalten der Beleuchtungsstärke der den Modulen zugeordneten Lichtquellen (22) ausführt.

15. Steuerungsverfahren nach einem der Ansprüche 10 bis 14, **dadurch gekennzeichnet, dass** man eine an eine Kurvensituation angepasste Beleuchtungsbegleitfunktion ausführt, bei der man das Drehen jedes der Module (10) steuert, um die Breite des ergänzenden Gesamtbündels in Abhängigkeit vom Lenkwinkel in der Kurve zur einen oder anderen Seite zu erhöhen.

16. Steuerungsverfahren nach einem der Ansprüche 10 bis 14, **dadurch gekennzeichnet, dass** man eine an eine Fahrsituation mit hoher Geschwindigkeit angepasste Beleuchtungsbegleitfunktion ausführt, bei der man eine Zentrierung aller Module (10) in der Achse des Fahrzeugs ausführt.

17. Steuerungsverfahren nach einem der Ansprüche 10 bis 14, **dadurch gekennzeichnet, dass** man eine an schlechte Sichtverhältnisse angepasste Beleuchtungsbegleitfunktion ausführt, bei der man die Module (10) schwenken lässt, um die Primärlichtbündel, die sie erzeugen, zu spreizen.

18. Steuerungsverfahren nach einem der Ansprüche 10 bis 14, **dadurch gekennzeichnet, dass** man eine Beleuchtungsbegleitfunktion vom Typ blendfreies Fernlicht ausführt, bei der man zwei benachbarte Module (10) schwenken lässt, um einen dunklen Beleuchtungsbereich zu schaffen, in dem ein vorausfahrendes oder entgegenkommendes Fahrzeug erkannt wird.

## Claims

1. Lighting and/or signalling headlamp for an automotive vehicle, comprising a casing and an assembly of at least two lighting and/or signalling modules, in which each module (10) comprises an optical system comprising means (20) for deviating light rays emitted by a first light source (22) so as to form a primary light beam towards the front of the vehicle, the addition of the primary light beams forming as output an overall light beam of said assembly,
at least one portion of each module is mounted so as to be movable in rotation about an axis (14) under the effect of a first actuator (12) so as to laterally shift the corresponding primary light beam output by the module,
the headlamp further comprising a control device which is able to produce, separately for each module, control instructions for rotating the optical system of said module,
the first light source (22) remaining fixed with respect to said first actuator (12),
**characterized in that** each module is fixed in said casing of the headlamp, and **in that**, in each module, said first actuator (12) is rigidly connected to the casing.

2. Headlamp according to Claim 1, **characterized in that** the control device is able to produce furthermore control instructions for turning on the light source (22) associated with said module (10).

3. Headlamp according to Claim 2, **characterized in that** said controls for turning on the light source (22) consist of a control of the degree of luminous intensity of the emission from the light source.

4. Headlamp according to one of the preceding claims, **characterized in that** the light source (22) consists of two semiconductor sources (22a, 22b) which are selectively activatable to produce separately a primary light beam of high-beam headlight type and a primary light beam of low-beam headlight type.

5. Headlamp according to one of the preceding claims, **characterized in that** the optical system consists of one or more lenses and/or one or more mirrors.

6. Headlamp according to one of Claims 1 to 5, **characterized in that** the optical system consists of a reflector mounted so as to be movable in rotation, formed by a first reflective face (20) of a support (16) mounted at the extremity of the axis (14) rotated under the effect of the first actuator (12) .

7. Headlamp according to Claim 6, **characterized in that** it comprises a chassis (18) comprising at least one screen (28, 30) able to be placed facing the first reflective face (20), said screen being predominantly neutral, so as to be traversed by the light rays reflected by the first reflective face, and bearing at its periphery (38) optical means for decoupling light rays emitted by a second light source (34).

8. Headlamp according to the preceding claim, **characterized in that** the chassis (18) is rigidly connected so as to rotate with the support (16).

9. Headlamp according to one of the preceding claims, **characterized in that** it further comprises a device for the projection of a main overall beam, said lighting and/or signalling modules together generating an overall beam complementary to the main overall beam.

10. Method for controlling a headlamp comprising an assembly of at least two lighting and/or signalling modules in accordance with one of Claims 1 to 9, in which one or more modules (10) and the primary light beam that these modules are able respectively to produce, is or are controlled in rotation in such a way as to produce a lighting accompaniment function, by an overall light beam formed by said primary light beams, said lighting accompaniment function being suitable for a driving situation determined according to the analysis of state information in respect of the vehicle and/or road scene.

11. Control method according to Claim 10, **characterized in that** the type of lighting that is produced is determined by a main device for emitting a light beam, and **in that** said accompaniment function is determined according to the type of lighting determined.

12. Control method according to one of Claims 10 and 11, **characterized in that** the combined rotation of each of the modules (10) of the assembly is carried out.

13. Control method according to one of Claims 10 to 12, **characterized in that** different rotations of the modules (10) of one and the same assembly are carried out.

14. Control method according to one of Claims 10 to 13, **characterized in that** the lighting accompaniment function is carried out by decreasing, increasing or turning off the lighting intensity of the light sources (22) associated with said modules, in addition to by rotating the modules (10).

15. Control method according to one of Claims 10 to 14, **characterized in that** a lighting accompaniment function suitable for a bend situation is produced, in which each of the modules (10) is controlled in rotation so as to increase the width of the complementary overall beam on one side or the other according to the steering wheel angle in the bend.

16. Control method according to one of Claims 10 to 14, **characterized in that** a lighting accompaniment function suitable for a high-speed driving situation is produced, in which a centring of all of the modules (10) on the axis of the vehicle is carried out.

17. Control method according to one of Claims 10 to 14, **characterized in that** a lighting accompaniment function suitable for conditions of poor visibility is produced, in which the modules (10) are pivoted so as to separate the primary light beams that they produce.

18. Control method according to one of Claims 10 to 14, **characterized in that** a lighting accompaniment function of non-dazzle high-beam type is produced, in which two neighbouring modules (10) are pivoted so as to create a dark lighting zone in which a followed or crossing vehicle is detected.
